# EUROPÄISCHE PATENTSCHRIFT

(11) **EP 2 041 427 B1**
(45) Veröffentlichungstag und Bekanntmachung des Hinweises auf die Patenterteilung: **27.05.2015**
(21) Anmeldenummer: 07765493.7
(22) Anmeldetag: 19.06.2007
(51) Int. Cl.: F02P 23/04

(54) **VERFAHREN ZUM BETREIBEN EINER ZÜNDEINRICHTUNG FÜR EINE BRENNKRAFTMASCHINE**
METHOD FOR OPERATING AN IGNITION DEVICE FOR AN INTERNAL COMBUSTION ENGINE
PROCÉDÉ D'EXPLOITATION D'UN DISPOSITIF D'ALLUMAGE POUR UN MOTEUR À COMBUSTION INTERNE

(30) Priorität: 04.07.2006 DE 102006030722
(43) Veröffentlichungstag der Anmeldung: 01.04.2009
(73) Patentinhaber: Robert Bosch GmbH, 70442 Stuttgart (DE)
(72) Erfinder: VOGEL, Manfred, 71254 Ditzingen (DE); HERDEN, Werner, 70839 Gerlingen (DE); RIDDERBUSCH, Heiko, 70567 Stuttgart-Moehringen (DE)
(86) Internationale Anmeldenummer: PCT/EP2007/056080
(87) Internationale Veröffentlichungsnummer: WO 2008/003584

(56) Entgegenhaltungen:
- WO-A-02/081904
- DE-A1- 19 911 737
- US-A1- 2006 037 572
- GERINGER B ET AL: "Laserinduzierte Zündung an einem Otto-DI-Brennverfahren der zweiten Generation. Laser Induced Ignition on Gasoline Direct Injection Engines of the Second Generation" FORTSCHRITT-BERICHTE VDI. 24. INTERNATIONALES WIENER MOTORENSYMPOSIUM. WIEN, AUSTRIA, MAI, 15 -16, 2003, FORTSCHRITT-BERICHTE VDI. INTERNATIONALES MOTORENSYMPOSIUM. REIHE 12: VERKEHRSTECHNIK/FAHRZEUGT ECHNIK, DUESSELDORF: VDI VERLAG, DE, Bd. BAND 1. NR. 539, 15. Mai 2003 (2003-05-15), Seiten 87-109, XP002326953 ISBN: 3-18-353912-8

## Beschreibung

### Stand der Technik

Die Erfindung betrifft ein Verfahren zum Betreiben einer Zündeinrichtung für eine Brennkraftmaschine, insbesondere eines Kraftfahrzeugs, mit einer Lasereinrichtung, die einen laseraktiven Festkörper mit einer passiven Güteschaltung aufweist und einen Laserimpuls zur Abstrahlung in einen Brennraum erzeugt, und mit einer Pumplichtquelle, die ein Pumplicht für den laseraktiven Festkörper der Lasereinrichtung bereitstellt. Eine Verfahren zum Betreiben einer Zündeinrichtung mit einem Laser ist aus der DE 199 11 737 und der US 2006/0037572 A1 bekannt.

Die Erfindung betrifft ferner ein Steuergerät für eine derartige Zündeinrichtung sowie ein Computerprogramm für ein Steuergerät.

Bekannte Betriebsverfahren für Zündeinrichtungen der eingangs genannten Art weisen den Nachteil auf, dass sich unterschiedliche Störeinflüsse wie beispielsweise Temperaturänderungen sowie Exemplarstreuungen in den Eigenschaften der verwendeten Komponenten negativ auf die genaue Einhaltung eines gewünschten Zündzeitpunkts auswirken und damit den Verbrennungsprozess insbesondere hinsichtlich möglichst geringer Schadstoffemissionen und hohem Wirkungsgrad beeinträchtigen.

### Offenbarung der Erfindung

Demgemäß ist es Aufgabe der vorliegenden Erfindung, ein Verfahren, ein Steuergerät und ein Computerprogramm der eingangs genannten Art dahingehend zu verbessern, dass auch unter Einfluss von Störgrößen bzw. Exemplarstreuungen die genaue Einhaltung eines gewünschten Zündzeitpunkts möglich ist.

Diese Aufgabe wird bei einem Betriebsverfahren der eingangs genannten Art erfindungsgemäß dadurch gelöst, dass ein Zündzeitpunkt, zu dem der Laserimpuls erzeugt wird, auf einen vorgebbaren Sollwert geregelt wird, indem eine Strahlungsintensität des Pumplichts und/oder eine Pumpdauer und/oder ein Pumpstartzeitpunkt und/oder eine Wellenlänge des Pumplichts eingestellt wird.

Durch die erfindungsgemäße Regelung des Zündzeitpunkts ist es vorteilhaft möglich, den zeitlichen Jitter bei der Erzeugung von Laserimpulsen auf Werte zu reduzieren, welche einen ordnungsgemäßen und insbesondere emissionsarmen Betrieb der Brennkraftmaschine nicht beeinträchtigen. Beispielsweise ist es unter Anwendung des erfindungsgemäßen Regelungsverfahrens möglich, den zeitlichen Jitter von Laserimpulsen auf Werte von etwa kleiner 10 µs zu begrenzen, so dass auch bei hohen Drehzahlen der Brennkraftmaschine, wie beispielsweise etwa 6.000 U/min, ein störungsfreier Betrieb gewährleistet ist.

Weitere vorteilhafte Ausgestaltungen der vorliegenden Erfindung sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

### Kurze Beschreibung der Zeichnung

In der Zeichnung zeigt:
- Figur 1: eine schematische Darstellung einer Brennkraftmaschine mit einer Zündeinrichtung zur Verwendung mit dem erfindungsgemäßen Verfahren,
- Figur 2: eine Ausführungsform der Zündeinrichtung aus Figur 1 im Detail,
- Figur 3: den zeitlichen Verlauf einer Ansteuerung der Zündeinrichtung aus Figur 1, und
- Figur 4: ein vereinfachtes Funktionsdiagramm einer ersten Ausführungsform des erfindungsgemäßen Verfahrens.

### Ausführungsformen der Erfindung

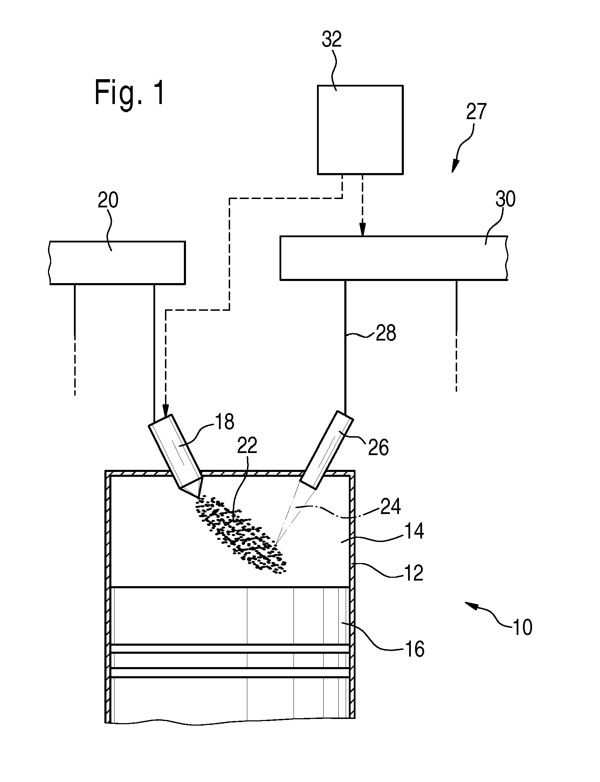

Eine Brennkraftmaschine trägt in Figur 1 insgesamt das Bezugszeichen 10. Sie dient zum Antrieb eines nicht dargestellten Kraftfahrzeugs. Die Brennkraftmaschine 10 umfasst mehrere Zylinder, von denen in Figur 1 nur einer mit dem Bezugszeichen 12 bezeichnet ist. Ein Brennraum 14 des Zylinders 12 wird von einem Kolben 16 begrenzt. Kraftstoff gelangt in den Brennraum 14 direkt durch einen Injektor 18, der an einen auch als Rail beziehungsweise Common-Rail bezeichneten Kraftstoff-Druckspeicher 20 angeschlossen ist.

In den Brennraum 14 eingespritzter Kraftstoff 22 wird mittels eines Laserimpulses 24 entzündet, der von einer eine Lasereinrichtung 26 umfassenden Zündeinrichtung 27 in den Brennraum 14 abgestrahlt wird. Hierzu wird die Lasereinrichtung 26 über eine Lichtleitereinrichtung 28 mit einem Pumplicht gespeist, welches von einer Pumplichtquelle 30 bereitgestellt wird. Die Pumplichtquelle 30 wird von einer Steuer- und Regeleinrichtung 32 gesteuert, die auch den Injektor 18 ansteuert.

Beispielsweise kann es sich bei der Pumplichtquelle 30 um eine Halbleiter-Laserdiode handeln, die in Abhängigkeit eines Steuerstroms ein entsprechendes Pumplicht über die Lichtleitereinrichtung 28 an die Lasereinrichtung 26 ausgibt. Obwohl Halbleiter-Laserdioden und andere klein bauende Pumplichtquellen bevorzugt für einen Einsatz in dem Kraftfahrzeugbereich verwendet werden, ist für den Betrieb der erfindungsgemäßen Zündeinrichtung 27 prinzipiell jede Art von Pumplichtquelle verwendbar.

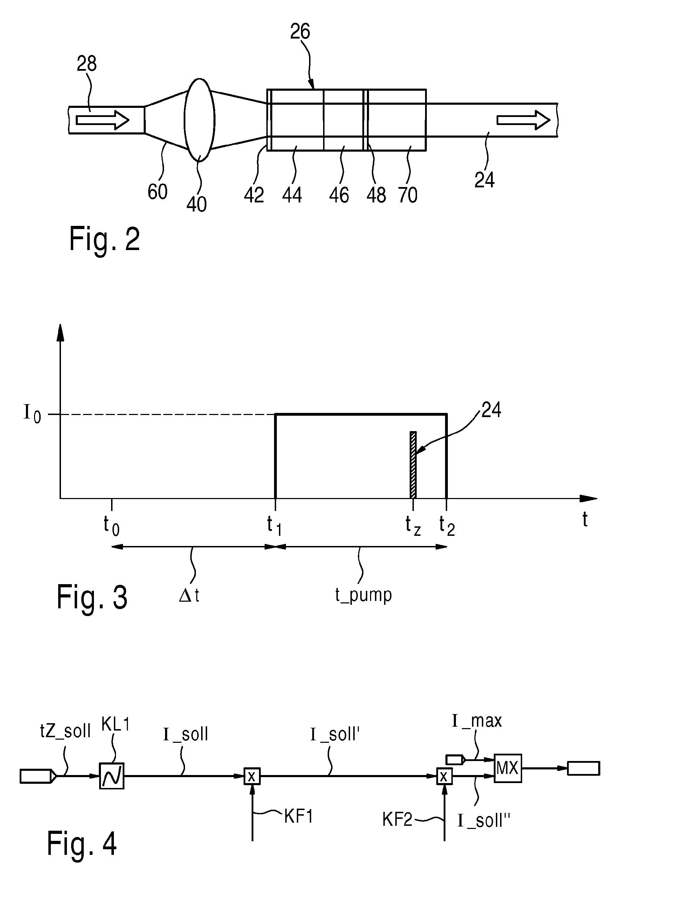

Figur 2 zeigt schematisch eine Detailansicht der Lasereinrichtung 26 aus Figur 1.

Wie aus Figur 2 ersichtlich, weist die Lasereinrichtung 26 einen laseraktiven Festkörper 44 auf, dem eine auch als Q-switch bezeichnete passive Güteschaltung 46 optisch nachgeordnet ist. Der laseraktive Festkörper 44 bildet hierbei zusammen mit der passiven Güteschaltung 46 sowie dem in Figur 2 links hiervon angeordneten Einkoppelspiegel 42 und dem Auskoppelspiegel 48 einen Laser-Oszillator aus, dessen Schwingverhalten von der passiven Güteschaltung 46 abhängt und damit zumindest mittelbar in an sich bekannter Weise steuerbar ist.

Bei der in Figur 2 abgebildeten Konfiguration der Lasereinrichtung 26 wird Pumplicht 60 durch die bereits unter Bezugnahme auf Figur 1 beschriebene Lichtleitereinrichtung 28 von der ebenfalls bereits beschriebenen Pumplichtquelle 30 auf eine vorliegend durch eine bikonvexe Linse 40 symbolisierte Einkoppeloptik geleitet, die das Pumplicht 60 auf den Einkoppelspiegel 42 bündelt. Da der Einkoppelspiegel 42 für die Wellenlängen des Pumplichts 60 durchsichtig ist, dringt das Pumplicht 60 in den laseraktiven Festkörper 44 ein und führt darin zu einer an sich bekannten Besetzungsinversion.

Während die passive Güteschaltung 46 ihren Ruhezustand aufweist, in dem sie einen verhältnismäßig kleinen Transmissionskoeffizienten besitzt, wird ein Laserbetrieb in dem laseraktiven Festkörper 44 beziehungsweise in dem durch den Einkoppelspiegel 42 und den Auskoppelspiegel 48 begrenzten Festkörper 44, 46 vermieden. Mit steigender Pumpdauer steigt jedoch die Strahlungsdichte in dem Laser-Oszillator 42, 44, 46, 48 an, so dass die passive Güteschaltung 46 ausbleicht, d.h. einen größeren Transmissionskoeffizienten annimmt, und der Laserbetrieb beginnen kann.

Auf diese Weise entsteht ein auch als Riesenimpuls bezeichneter Laserimpuls 24, der eine verhältnismäßig hohe Spitzenleistung aufweist. Der Laserimpuls 24 wird gegebenenfalls unter Verwendung einer weiteren Lichtleitereinrichtung oder auch direkt durch ein nicht abgebildetes Brennraumfenster der Lasereinrichtung 26 in den Brennraum 14 (Figur 1) der Brennkraftmaschine 10 eingekoppelt, so dass darin vorhandener Kraftstoff 22 entzündet wird.

Gegebenenfalls kann dem Laser-Oszillator 42, 44, 46, 48 ein optischer Verstärker 70 zur optischen Verstärkung des Laserimpulses 24 zugeordnet sein, wie dies in Figur 2 gezeigt ist. Der optische Verstärker 70 ist für die Anwendung des nachstehend beschriebenen erfindungsgemäßen Verfahrens jedoch nicht erforderlich.

Da sich aufgrund von unterschiedlichen Störeinflüssen wie beispielsweise Temperaturschwankungen, Alterungseffekten und Exemplarstreuungen in den Materialeigenschaften des laseraktiven Festkörpers 44 usw. - trotz gleichbleibender Ansteuerung - ein zeitlicher Jitter, das heißt eine zeitliche Fluktuation des Auftretens, der Laserimpulse 24, ergeben kann, wird erfindungsgemäß der Zündzeitpunkt, zu dem der Laserimpuls 24 tatsächlich erzeugt wird, auf einen vorgebbaren Sollwert geregelt.

Figur 3 gibt hierzu einen Überblick über die Ansteuerung der erfindungsgemäßen Zündeinrichtung 27. Ausgehend von einem Startzeitpunkt t0 wird zunächst für eine vorgebbare Wartezeit Δt gewartet, bis schließlich ab dem Pumpstartzeitpunkt t1 die Pumplichtquelle 30 der Zündeinrichtung 27 aktiviert wird und damit ein Pumplicht 60 mit der in Figur 3 als Bezugswert 10 angegebenen Strahlungsintensität an den laseraktiven Festkörper 44 (Figur 2) abgibt. Die Pumplichtquelle 30 bleibt während der gesamten Pumpdauer t_pump aktiviert, die sich gemäß Figur 3 bis zu dem Zeitpunkt t2 erstreckt, das heißt, t_pump = t2 - t1.

Innerhalb der Pumpdauer t_pump wird durch das Bestrahlen des laseraktiven Festkörpers 44 mit dem Pumplicht 60 wie bereits beschrieben darin eine Besetzungsinversion aufgebaut, die nach einem Erbleichen der passiven Güteschaltung 46 schließlich zu einem Laserbetrieb führt, so dass zu einem tatsächlichen Zündzeitpunkt tZ der in Figur 3 auch mit dem Bezugszeichen 24 bezeichnete Laserimpuls abgegeben wird.

Das tatsächliche Auftreten des Laserimpulses 24 sowie der entsprechende Zündzeitpunkt tZ werden erfindungsgemäß durch an sich bekannte und vorliegend nicht näher beschriebene Messmittel festgestellt und der Steuereinrichtung 32 zur Durchführung des erfindungsgemäßen Regelungsverfahrens zugeleitet. Da der tatsächliche Zündzeitpunkt tZ prinzipiell aufgrund der beschriebenen Störeinflüsse schwanken kann, ist die Pumpdauer t_pump vorteilhaft so gewählt, dass sie um eine vorgebbare Zeitdifferenz größer ist als die Zeitdifferenz zwischen dem erwarteten Zündzeitpunkt und dem Pumpstartzeitpunkt t1. Diese Zeitdifferenz wird daher auch als Sicherheitszeit bezeichnet und soll gewährleisten, dass auch bei einer verspäteten Erzeugung des Laserimpulses 24 die Pumplichtversorgung nicht vorzeitig unterbrochen wird.

Nachstehend ist unter Bezugnahme auf das Funktionsdiagramm der Figur 4 eine erste Variante des erfindungsgemäßen Regelungsverfahrens näher beschrieben.

Als Eingangsgröße für das erfindungsgemäße Verfahren liegt ein Sollwert tZ_soll für den Zündzeitpunkt vor, der beispielsweise von der Steuereinrichtung 32 der Brennkraftmaschine 10 in Abhängigkeit anderer Betriebsparameter ermittelt worden ist, und der angibt, wann der Laserimpuls 24 in den Brennraum 14 abgestrahlt werden soll.

Der Sollwert tZ_soll wird einer ersten Kennlinie KL1 zugeführt, die hieraus beispielhaft einen Sollwert I_soll für die von der Pumplichtquelle 30 abgegebene Strahlungsintensität bildet. Der Sollwert I_soll wird anschließend unter Multiplikation mit einem ersten Korrekturfaktor KF1 in einen korrigierten Sollwert I_soll' überführt. Nachfolgend wird der korrigierte Sollwert I_soll' im Wege einer weiteren Multiplikation mit einem zweiten Korrekturfaktor KF2 in einen korrigierten Sollwert I_soll" überführt.

Der erste Korrekturfaktor KF1 gibt einen funktionalen Zusammenhang zwischen einer Temperatur der Brennkraftmaschine 10 und der tatsächlich einzustellenden Strahlungsintensität I_soll der Pumplichtquelle 30 an. Dabei wird erfindungsgemäß berücksichtigt, dass die Lasereinrichtung 26 aufgrund ihrer räumlichen Nähe zu der Brennkraftmaschine 10 in der direkten Umgebung des Brennraums 14 nahezu dieselbe Temperatur aufweist wie die Brennkraftmaschine 10 selbst. Eine Temperaturänderung der Brennkraftmaschine 10 bewirkt daher auch eine Temperaturänderung der Lasereinrichtung 26 beziehungsweise der darin enthaltenen Komponenten 44, 46. Temperaturänderungen des laseraktiven Festkörpers 44 wirken sich beispielsweise auch auf die Erzeugung des Laserimpulses 24 beziehungsweise die Effizienz bei der Ausnutzung von in den laseraktiven Festkörper 44 eingestrahltem Pumplicht 60 aus und werden dementsprechend vermöge des ersten Korrekturfaktors KF1 berücksichtigt, um auch bei unterschiedlichen Temperaturen der Brennkraftmaschine 10 beziehungsweise des laseraktiven Festkörpers 44 stets die Einstellung der geforderten Strahlungsintensität I_soll für das Pumplicht 60 zu gewährleisten. Dementsprechend stellt der korrigierte Werte I_soll' einen um die Temperatur der Brennkraftmaschine 10 bereinigten Sollwert für die Strahlungsintensität des Pumplichts 60 dar.

Analog zu der vorstehend beschriebenen Berücksichtigung der Temperatur Brennkraftmaschine 10 kann bei der Verwendung einer Laserdiode als Pumplichtquelle 30 auch die Berücksichtigung des Zusammenhangs zwischen der Temperatur der Laserdiode und der von der Laserdiode abgegebenen Strahlungsintensität und der emittierten Pumpwellenlänge des Pumplichts 60 erfolgen, was vorliegend durch den Korrekturfaktor KF2 angedeutet ist.

Beide Korrekturfaktoren KF1, KF2 können in Abhängigkeit der jeweiligen Temperatur und einer entsprechenden, beispielsweise zuvor aufgrund von Messungen ermittelten Kennlinie in an sich bekannter Weise erhalten werden. Die entsprechenden Kennlinien zur Ermittlung der Korrekturfaktoren KF1, KF2 sowie die Kennlinie KL1 kann beispielsweise in einem vorzugsweise nicht flüchtigen Speicher des Steuergeräts 32 (Figur 1) abgelegt sein.

Der auf die vorstehend beschriebene Weise erhaltene korrigierte Sollwert I_soll" für die Strahlungsintensität wird anschließend in einem Begrenzer MX mit einem maximal zulässigen Wert für die Strahlungsintensität I_max verglichen und gegebenenfalls auf diesen begrenzt. Anschließend kann der korrigierte Sollwert I_soll" in einen entsprechenden Steuerstrom für die Laserdiode der Pumplichtquelle 30 umgerechnet werden, was ebenfalls über eine Kennlinie (nicht gezeigt) erfolgen kann.

Die nachfolgende Ansteuerung der erfindungsgemäßen Lasereinrichtung 26 erfolgt dementsprechend unter Verwendung der wie vorstehend beschrieben ermittelten Strahlungsintensität I_soll" für das Pumplicht 60.

Beispielsweise kann die in Figur 3 angegebene Strahlungsintensität 10 den vorstehend berechneten Wert I_soll" aufweisen. Bei einer derartigen Ansteuerung ergibt sich ein nachfolgender Laserimpuls 24 zu dem Zündzeitpunkt tZ, der wiederum durch die bereits beschriebenen Messmittel erfasst wird. Der tatsächliche Zündzeitpunkt tZ wird zur Ermittlung einer Regeldifferenz erfasst, und sofern die Regeldifferenz einen vorgebbaren Schwellwert überschreitet findet eine entsprechende erfindungsgemäße Anpassung derjenigen Stellgrößen statt, die den Zündzeitpunkt tZ beeinflussen.

Anstelle des Sollwerts tZ_soll kann in dem Funktionsdiagramm nach Figur 4 auch direkt die Regeldifferenz als Eingangsgröße verwendet werden, in deren Abhängigkeit beispielsweise die Strahlungsintensität des Pumplichts 60 angepasst werden kann usw.

Beispielsweise kann bei einem tatsächlich zu spät auftretenden Laserimpuls 24 durch das in Figur 4 veranschaulichte Verfahren die Strahlungsintensität des Pumplichts 60 derart erhöht werden, dass sich ein nachfolgender Laserimpuls 24 früher einstellt, sich die Regeldifferenz des erfindungsgemäßen Regelungsverfahrens also verringert.

Neben der Verwendung einer Strahlungsintensität des Pumplichts 60 beziehungsweise eines entsprechenden Steuerstroms einer als Pumplichtquelle 30 ausgebildeten Laserdiode ist es ferner denkbar, die Pumpdauer t_pump oder auch den Pumpstartzeitpunkt t1 sowie eine Wellenlänge des Pumplichts 60 einzustellen, um die tatsächliche zeitliche Lage des Laserimpulses 24 zu beeinflussen.

Die Veränderung der Wellenlänge des Pumplichts 60 kann beispielsweise mittels einer aktiven Temperierung der als Laserdiode ausgebildeten Pumplichtquelle 30 erfolgen.

Im Falle der Beeinflussung des Zündzeitpunkts tZ durch eine Modifikation der Pumpdauer t_pump kann vorteilhaft eine Begrenzung der Pumpdauer t_pump auf eine maximal zulässige Pumpdauer eingesetzt werden, um eine thermische Überlastung der Pumplichtquelle 30 zu vermeiden.

Besonders vorteilhaft ist bei einer weiteren Ausführungsform des erfindungsgemäßen Verfahrens vorgesehen, dass die Regelung des Zündzeitpunkts des Laserimpulses 24 in Abhängigkeit einer Drehzahl der Brennkraftmaschine 10 erfolgt. Dadurch ist es sehr vorteilhaft möglich, in besonders zeitkritischen Betriebsbereichen, die beispielsweise verhältnismäßig großen Drehzahlen der Brennkraftmaschine 10 entsprechen, eine besonders präzise Regelung durchzuführen, während in anderen Betriebsbereichen mit geringeren Drehzahlen der Brennkraftmaschine 10 eine weniger genaue Regelung des Zündzeitpunkts des Laserimpulses 24 erfolgen muss. Je nach dem Betriebspunkt der Brennkraftmaschine 10 bzw. den Anforderungen an den maximalen zeitlichen Jitter der Laserimpulse 24 können auch unterschiedliche Stellgrößen modifiziert werden, um den Zündzeitpunkt anzupassen.

Das erfindungsgemäße Betriebsverfahren für die Zündeinrichtung 27 kann beispielsweise in Form eines Computerprogramms realisiert sein, das in einem elektronischen Speicher des Steuergeräts 32 gespeichert ist und auf dem Steuergerät 32 beziehungsweise einer darin vorgesehenen Recheneinheit (nicht gezeigt) abläuft.

Ganz allgemein ist es möglich, die zeitliche Lage des Laserimpulses 24 gleichzeitig durch mehrere der vorstehend genannten Einflussgrößen zu beeinflussen. Beispielsweise kann gleichzeitig eine Pumpdauer t_pump und die Strahlungsintensität 10 des Pumplichts 60 modifiziert werden usw.

Geringfügige Korrekturen der zeitlichen Lage des Laserimpulses 24 sind insbesondere auch allein durch eine Veränderung der Wartezeit Δt (Figur 3), das heißt durch eine Verschiebung des Pumpstartzeitpunkts t1 realisierbar, wohingegen z.B. das totale Ausbleiben eines Laserimpulses 24 durch eine Änderung von den Laserbetrieb steuernden Einflussgrößen wie beispielsweise der Strahlungsintensität 10 sowie der Pumpdauer t_pump oder der Wellenlänge des Pumplichts 60 korrigierbar ist.

Durch das vorstehend beschriebene erfindungsgemäße Regelungsverfahren für den Zündzeitpunkt des Laserimpulses 24 können neben Temperaturschwankungen auch andere Störeinflüsse wie beispielsweise unterschiedliche Dotierungen des laseraktiven Festkörpers 44 sowie unterschiedliche Pumpvolumina beispielsweise in Abhängigkeit einer unterschiedlichen Pumpstrahlformung im Einkoppelbereich des Pumplichts 60 in den laseraktiven Festkörper 44 und dergleichen kompensiert werden. Ebenso sind unterschiedliche Anfangstransmissionswerte der passiven Güteschaltung 46 und ihr Einfluss auf die zeitliche Lage des Laserimpulses 24 durch das erfindungsgemäße Verfahren kompensierbar.

Auf dieselbe Weise können auch unterschiedliche Reflektionskoeffizienten der Ein- und Auskoppelspiegel 42, 48 für das Pumplicht 60 beziehungsweise den Laserimpuls 24 kompensiert werden.

Das erfindungsgemäße Prinzip ist vorteilhaft auch bei Stationärmotoren anwendbar.

## Patentansprüche

1. Verfahren zum Betreiben einer Zündeinrichtung für eine Brennkraftmaschine (10), insbesondere eines Kraftfahrzeugs, mit einer Lasereinrichtung (26), die einen laseraktiven Festkörper (44) mit einer passiven Güteschaltung (46) aufweist und einen Laserimpuls (24) zur Abstrahlung in einen Brennraum (14) erzeugt, und mit einer Pumplichtquelle (30), die ein Pumplicht (60) für den laseraktiven Festkörper (44) der Lasereinrichtung (26) bereitstellt, **dadurch gekennzeichnet, dass** ein Zündzeitpunkt (tZ), zu dem der Laserimpuls (24) erzeugt wird, auf einen vorgebbaren Sollwert geregelt wird, indem eine Strahlungsintensität (10) des Pumplichts (60) und/oder eine Pumpdauer (t_pump) und/oder ein Pumpstartzeitpunkt (t1) und/oder eine Wellenlänge des Pumplichts (60) eingestellt wird.

2. Verfahren nach Anspruch 1, wobei eine Laserdiode als Pumplichtquelle (30) verwendet wird, **dadurch gekennzeichnet, dass** die Strahlungsintensität (10) des Pumplichts (60) durch Einstellen eines entsprechenden Steuerstroms der Laserdiode eingestellt wird.

3. Verfahren nach Anspruch 2, **dadurch gekennzeichnet, dass** die Wellenlänge des Pumplichts (60) mittels einer aktiven Temperierung der Laserdiode verändert wird.

4. Verfahren nach einem der vorstehenden Ansprüche, **dadurch gekennzeichnet, dass** eine Temperatur des laseraktiven Festkörpers (44) beziehungsweise der Lasereinrichtung (26) aus einer Temperatur der Brennkraftmaschine (10) abgeleitet wird.

5. Verfahren nach einem der vorstehenden Ansprüche, **dadurch gekennzeichnet, dass** eine/die Temperatur des laseraktiven Festkörpers (44) beziehungsweise der Lasereinrichtung (26) und/oder eine Temperatur der Pumplichtquelle (30) bei der Regelung berücksichtigt wird.

6. Verfahren nach einem der vorstehenden Ansprüche, **dadurch gekennzeichnet, dass** die Pumpdauer (t_pump) auf eine maximal zulässige Pumpdauer begrenzt wird.

7. Verfahren nach einem der vorstehenden Ansprüche, **dadurch gekennzeichnet, dass** die Regelung in Abhängigkeit einer Drehzahl der Brennkraftmaschine (10) erfolgt.

8. Verfahren nach einem der vorstehenden Ansprüche, **dadurch gekennzeichnet, dass** ein Zusammenhang zwischen der Strahlungsintensität (10) des Pumplichts (60) und/oder der Pumpdauer (t_pump) und/oder dem Pumpstartzeitpunkt (t1) und/oder der Wellenlänge des Pumplichts (60) und dem Zündzeitpunkt (tZ) aus einer Kennlinie und/oder einem Kennfeld erhalten wird.

9. Computerprogramm, **dadurch gekennzeichnet, dass** es zur Ausführung eines Verfahrens nach einem der Ansprüche 1 bis 8 programmiert ist.

10. Steuergerät (32) für eine Zündeinrichtung für eine Brennkraftmaschine (10), insbesondere eines Kraftfahrzeugs, **dadurch gekennzeichnet, dass** es zur Ausführung eines Verfahrens nach einem der Ansprüche 1 bis 8 ausgebildet ist.

## Claims

1. Method for operating an ignition device for an internal combustion engine (10), in particular of a motor vehicle, having a laser device (26) which has a laser-active solid body (44) with passive Q-switching (46) and generates a laser pulse (24) for radiation into a combustion chamber (14), and having a pumping light source (30) which makes available a pumping light (60) for the laser-active solid body (44) of the laser device (26), **characterized in that** an ignition time (tZ) at which the laser pulse (24) is generated is regulated to a predefineable setpoint value **in that** radiation intensity (10) of the pumping light (60) and/or a pumping period (t_pump) and/or a pumping start time (t1) and/or a wavelength of the pumping light (60) are/is set.

2. Method according to Claim 1, wherein a laser diode is used as a pumping light source (30), **characterized in that** the radiation intensity (10) of the pumping light (60) is set by setting a corresponding control current of the laser diode.

3. Method according to Claim 2, **characterized in that** the wavelength of the pumping light (60) is changed by means of active temperature control of the laser diode.

4. Method according to one of the preceding claims, **characterized in that** a temperature of the laser-active solid body (44) or of the laser device (26) is derived from a temperature of the internal combustion engine (10).

5. Method according to one of the preceding claims, **characterized in that** a/the temperature of the laser-active solid body (44) or of the laser device (26) and/or a temperature of the pumping light source (30) are/is taken into account in the control process.

6. Method according to one of the preceding claims, **characterized in that** the pumping period (t_pump) is limited to a maximum permissible pumping period.

7. Method according to one of the preceding claims, **characterized in that** the control is carried out as a function of a rotational speed of the internal combustion engine (10).

8. Method according to one of the preceding claims, **characterized in that** a relationship between the radiation intensity (I0) of the pumping light (60) and/or the pumping period (t_pump) and/or the pumping start time (t1) and/or the wavelength of the pumping light (60) and the ignition time (tZ) are/is obtained from a characteristic curve and/or a characteristic diagram.

9. Computer programme, **characterized in that** said computer programme is programmed to carry out a method according to one of Claims 1 to 8.

10. Control unit (32) for an ignition device for an internal combustion engine (10), in particular of a motor vehicle, **characterized in that** said control unit (32) is designed to carry out a method according to one of Claims 1 to 8.

## Revendications

1. Procédé d'exploitation d'un dispositif d'allumage pour un moteur à combustion interne (10), notamment d'un véhicule automobile, avec un dispositif laser (26) comportant un corps solide (44) à action laser avec un circuit de biens (46) passif et une impulsion laser (24) produite pour rayonner dans une chambre de combustion (14), et avec une source lumineuse de pompage (30) mettant à disposition une lumière de pompage (60) pour le corps solide (44) à action laser du dispositif laser (26), **caractérisé en ce qu'**un moment d'allumage (tZ) auquel l'impulsion laser (24) est produit est réglé à une valeur théorique prédéfinissable, en réglant une intensité de rayonnement (10) de la lumière de pompage (60) et/ou une durée de pompage (t_pump) et/ou un moment de démarrage de pompage (t1) et/ou une longueur d'onde de la lumière de pompage (60).

2. Procédé selon la revendication 1, une diode à laser servant de source lumineuse de pompage (30), **caractérisé en ce que** l'intensité de rayonnement (10) de la lumière de pompage (60) est réglée par réglage d'un courant de commande correspondant de la diode à laser.

3. Procédé selon la revendication 2, **caractérisé en ce que** la longueur d'onde de la lumière de pompage (60) est modifiée à l'aide d'une tempérisation active de la diode à laser.

4. Procédé selon l'une quelconque des revendications précédentes, **caractérisé en ce qu'**une température du corps solide (44) à action laser et/ou du dispositif laser (26) est déduite d'une température du moteur à combustion interne (10).

5. Procédé selon l'une quelconque des revendications précédentes, **caractérisé en ce qu'**une/la température du corps solide (44) à action laser et/ou du dispositif laser (26) et/ou une température de la source lumineuse de pompage (30) est prise en compte en cas de réglage.

6. Procédé selon l'une quelconque des revendications précédentes, **caractérisé en ce que** la durée de pompage (t_pump) se limite à une durée de pompage maximale admise.

7. Procédé selon l'une quelconque des revendications précédentes, **caractérisé en ce que** le réglage dépend de la vitesse de rotation du moteur à combustion interne (10).

8. Procédé selon l'une quelconque des revendications précédentes, **caractérisé en ce qu'**un rapport entre l'intensité de rayonnement (10) de la lumière de pompage (60) et/ou la durée de pompage (t_pump) et/ou le moment de démarrage de pompage (t1) et/ou la longueur d'onde de la lumière de pompage (60) et le moment d'allumage (tZ) est obtenu à partir d'une courbe caractéristique et/ou d'un champ caractéristique.

9. Programme informatique, **caractérisé en ce qu'**il est programmé pour mettre en oeuvre un procédé selon l'une quelconque des revendications 1 à 8.

10. Appareil de commande (32) pour un dispositif d'allumage de moteur à combustion interne (10), notamment d'un véhicule automobile, **caractérisé en ce qu'**il est réalisé pour mettre en oeuvre un procédé selon l'une quelconque des revendications 1 à 8.
